# EUROPEAN PATENT APPLICATION

(11) **EP 2 564 687 A2**
(43) Date of publication of application: **06.03.2013**
(21) Application number: 12182251.4
(22) Date of filing: 29.08.2012
(51) Int. Cl.: A01G 1/04, A01G 9/14, A01G 9/24

(54) **Rack for a compost bed**

(30) Priority: 30.08.2011 NL 2007321
(71) Applicant: Christiaens Machines B.V., 5961 ND Horst (NL)
(72) Inventor: Christiaens, Martinus Leonardus Hendrikus Maria, 5866 AN Swolgen (NL); Roeven, Henricus Jozef Marie, 5988 NX Helden (NL)
(74) Representative: Clarkson, Paul Magnus

(57) **Abstract**

A rack for a compost bed (13) comprises a rack bottom (1), a carrier (11) which is supported with respect to the rack bottom for the compost bed and a liquid device (10) provided with a liquid supply (20) and a liquid discharge (21) via which a liquid can be passed in order to heat and/or cool the compost bed on the carrier. The liquid device (10) comprises at least one flat plate (14), one side of which faces the carrier (11) and the other side of which is directly connected to a liquid-carrying duct and/or which other side delimits a liquid-carrying duct (17), which liquid-carrying duct is connected to the liquid supply (20) and the liquid discharge (21). By means of such a plate-shaped liquid device, the compost bed can be heated or cooled evenly. In addition, aeration pipes (7) are provided for aerating the compost bed.

## Description

The invention relates to a rack for a compost bed, comprising a rack bottom, a carrier which is supported with respect to the rack bottom for the compost bed, and a liquid device provided with a liquid supply and a liquid discharge via which a liquid can be passed in order to heat and/or cool the compost bed on the carrier.

Such a rack is known from NL-C-1035600, and can be used in growing, for example, mushrooms in a compost bed. The compost bed has to be heated or cooled in a desired manner by means of the liquid in order to achieve a climate in the compost bed which is optimally suitable for growing mycelium and therefore mushrooms. The heating or cooling is achieved by accommodating a number of lines in the rack bottom and by passing water at a certain temperature through them.

Although this makes it possible to influence the temperature to a certain degree, the known rack also has drawbacks. They are the result of the fact that the lines which have been incorporated in the rack bottom form a disturbance in the surface thereof. Dirt may accumulate between the lines and the grooves in which they are situated and this may lead to a risk of contamination. The emptying of the rack by pulling the mat on which the compost bed is situated off the ground can result in problems due to the disturbances in the rack bottom.

The fact that the lines only provide a small contact surface with respect to the compost bed is another drawback and makes heat exchange difficult. As a result thereof, the temperature of the compost bed cannot be controlled as accurately as desired, which is disadvantageous for cultivation.

It is an object of the invention to improve a rack of the above-described type in such a manner that the desired hygiene requirements are met while at the same time allowing the temperature to be controlled in an optimum manner. This object is achieved by the fact that the liquid device comprises at least one flat plate, one side of which faces the carrier and the other side of which is directly connected to a liquid-carrying duct and/or said other side of which delimits a liquid-carrying duct, which liquid-carrying duct is connected to the liquid supply and the liquid discharge.

With the rack according to the invention, the heat exchange with the compost bed takes place via a flat plate. The surface of such a flat plate can be kept free of dirt in a very simple way. The surface does not contain any gaps or grooves, so that it is not possible for any dirt to collect in spots which are difficult to access. Cleaning the surface can be carried out in a simple manner. Furthermore, the flat plate provides a significantly larger heat exchange area than a number of pipes. As a result thereof, it is possible to optimize the temperature control of the compost bed.

In addition, it is possible to produce a simple structure if the carrier is directly supported on the plates. This carrier is preferably configured as a coarse lattice.

The liquid-carrying duct may be configured in various ways. Thus, it is possible, for example, to weld one or more pipes to the underside of the flat plate. The heat can be transferred via the plate which has a sufficient heat-conducting capacity. In such a case, the plate is preferably made of a metal.

Preference is given to a double-walled plate which contains at least one internal liquid-carrying duct. Preferably, several ducts are provided and the plate is configured as a so-called partition plate. It is preferably made of a plastic. Furthermore, several mutually parallel double-walled plates may be provided, each of which is connected to the liquid supply and the liquid discharge. By arranging the plates next to one another, racks of any desired width can be produced, in which case the temperature can be controlled in the desired manner across the entire width of the rack.

According to a further preferred embodiment, the partition plate has several internal liquid-carrying ducts. In order to heat and/or cool such a plate across its entire length as evenly as possible, the liquid supply may be connected to a set of ducts at one end of the plate, the liquid discharge may be connected to the other set of ducts at the same end of the plate in such a manner that the ducts of both sets of ducts are connected to one another at the opposite end of the plate in order to provide U-shaped flow paths.

Due to the fact that a compost bed contains several plates, the difference between the supply temperature and the discharge temperature will be smoothed out in the compost.

In order to improve growth further, it may be desirable to aerate the compost bed. This can be achieved if an aeration means is provided which is situated under the carrier for aerating the compost bed. By means of such an aeration means, it is possible, for example, to suck air out of or to supply air to the compost bed. The aeration means may comprise at least one aeration pipe provided with openings. Such an aeration pipe, which preferably has a square or rectangular cross section in connection with the stability, may preferably extend between two adjacent liquid devices.

The square or rectangular cross section of such pipes readily adjoins the flat plates, in particular with the double-walled variant, in order to achieve the desired closed surface of the rack.

For the purpose of further controlling the temperature of the compost bed and limiting the heat exchange with the surroundings, the liquid device may be supported with respect to the rack bottom by a heat-insulating material. In particular, a filling, e.g. made of heat-insulating material, may be situated between in each case two adjacent aeration means and a liquid device is in each case supported thereon.

The combined surface of the sides of the plates facing the carrier covers at least preferably 50% of the surface of the rack bottom. Furthermore, the rack may have legs. The legs may be provided with a weighing device for weighing the compost bed.

Below, the invention will be explained in more detail with reference to an exemplary embodiment illustrated in the figures, in which:
Fig. 1 shows a cross section of a rack.
Fig. 2 shows the detail from II in Fig. 1 on an enlarged scale.
Fig. 3 shows a top view of a part of the rack.
Fig. 4 shows a flow diagram of the aeration means.
Fig. 5 shows a flow diagram of the cooling or heating means.

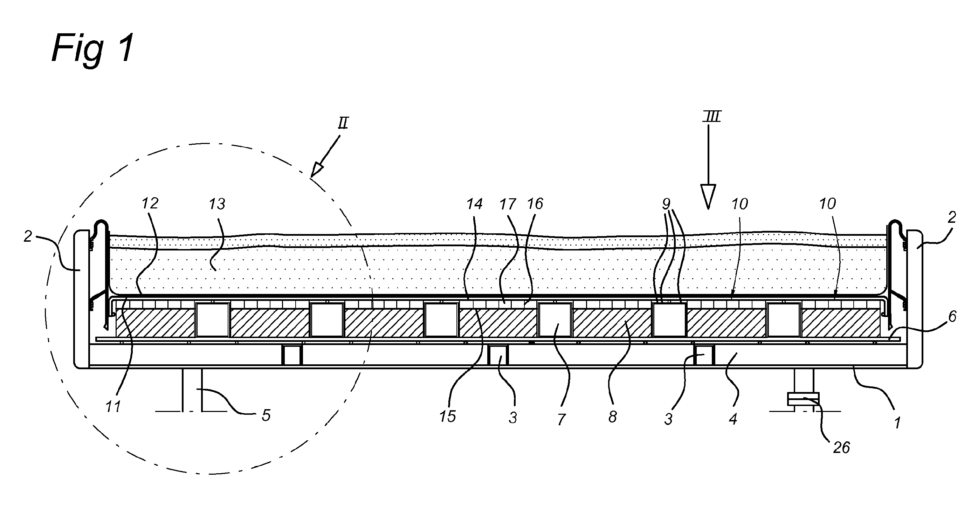

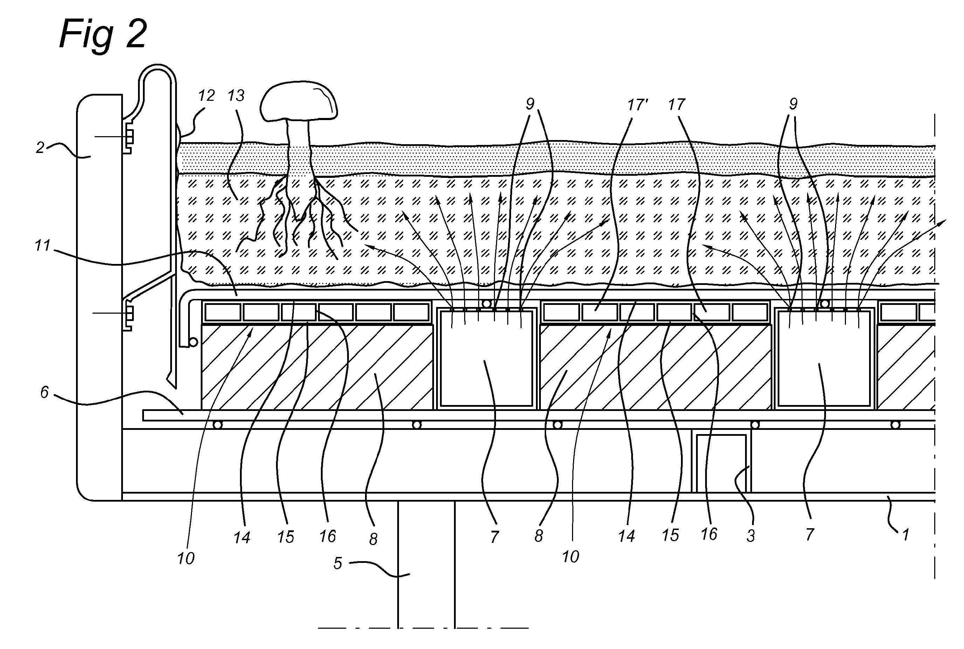

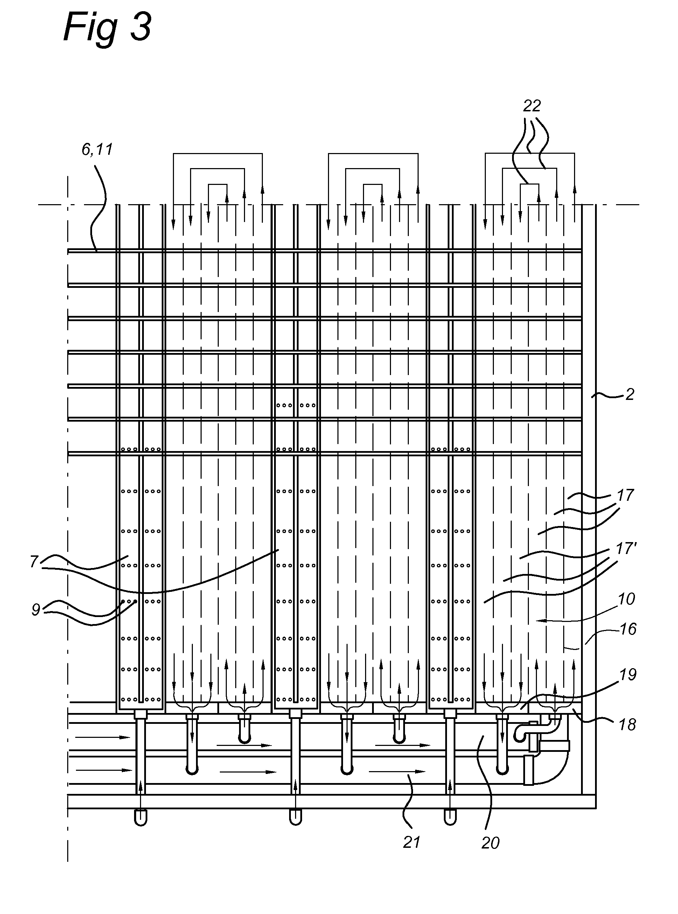

The rack illustrated in Figs. 1, 2 and 3 consists of a rack bottom 1 with side walls 2. The rack bottom has longitudinal profiles 3 and transverse profiles 4 supported by legs 5. A grate 6 is placed on top of the assembly of transverse profiles 4 and longitudinal profiles 3. Viewed in the transverse direction of the rack, aeration pipes 7 and strips of insulating material 8 are alternately supported on the grate 6. The aeration pipes have aeration openings 9 at the top side. Between in each case two aeration pipes 7 and on each insulating material strip 8, a partition plate 10 is in each case arranged. On top of the partition plates 10 and the aeration pipes 7, a further grate 11 is placed, on top of which a porous mat 12 is laid. Finally, the compost bed 13 is poured onto the porous mat 12. By means of the mat 12, the compost bed 13 can be pushed off the rack at the end of the growing period via the grate-shaped carrier 6.

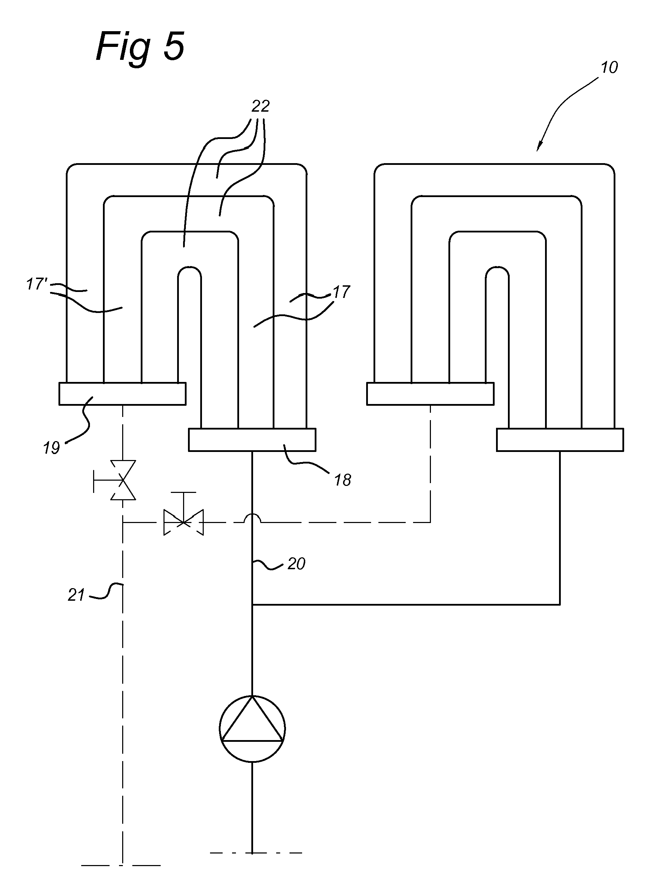

Each of the partition plates 10 consists of a flat top disc 14 and a flat bottom disc 15 which are attached to one another by partitions 16. Between in each case two partitions 16, the top disc 14 and the bottom disc 15 in each case a liquid-carrying duct 17 is determined. As is shown in the flow diagram of Fig. 5, for example, three ducts 17 and three ducts 17' may be provided, giving a total of six ducts per partition plate. Obviously, other numbers of ducts per partition plate are also possible. The ducts 17 are connected to a liquid supply 20 by means of a manifold 18, while the ducts 17' are connected to a liquid discharge 19 by means of a manifold 19. The manifolds 18, 19 are situated at one and the same end of the partition plate 10.

At the opposite end of the partition plate 10, a duct 17 and a duct 17' are in each case connected to one another by a diversion 22. In operation, hot or cold water is therefore introduced into the ducts 17 via the liquid supply 20 and the manifold 18, diverted via the diversion 22, subsequently passed through the ducts 17' and discharged via the manifold 19 via the liquid discharge 21. The advantage of directing the water in such a way is that, due to heat exchange, the compost directly above the plate assumes the temperature of the plate. The fact that there are several plates in the rack leads to the creation of many strips of compost which are slightly warmer or slightly colder. These alternating strips make efficient smoothing out of the temperature possible. As a result thereof, there will hardly be any difference in temperature between the front and rear end of the partition plate, viewed in the direction of flow.

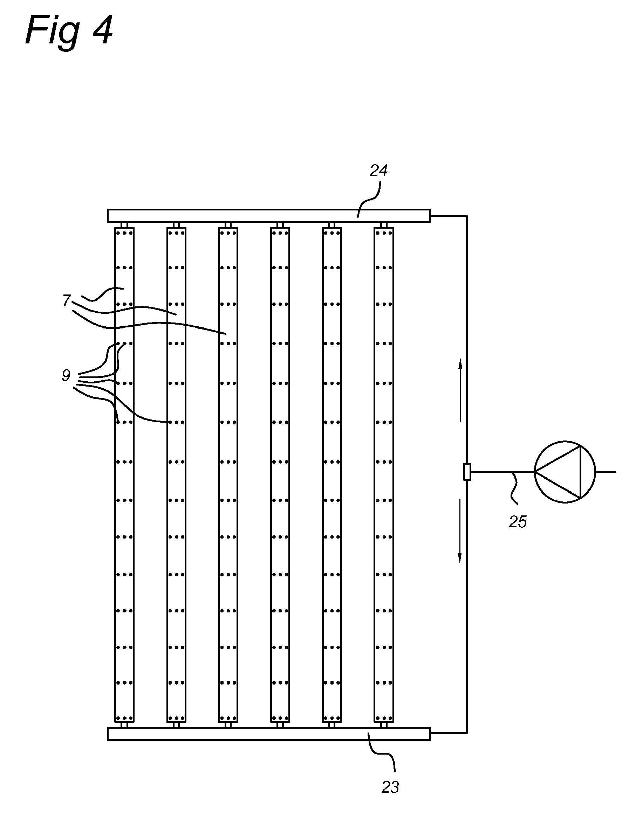

Air is supplied to or discharged from the aeration pipes 7 through the pipe 25 via the manifolds 23, 24 which are situated at both ends thereof, as is illustrated in the diagram of Fig. 4. It is also possible to provide additional manifolds (not shown) at a distance between both ends of the aeration pipes 7, if the latter are very long. One of the legs 5 may comprise a weighing device 26 by means of which the weight of the compost bed 13 can be determined.

### List of reference numerals

- 1.: Rack bottom
- 2.: Side wall
- 3.: Longitudinal profile
- 4.: Transverse profile
- 5.: Leg
- 6.: Grate
- 7.: Aeration pipe
- 8.: Insulating material strip
- 9.: Aeration opening
- 10.: Partition plate
- 11.: Grate
- 12.: Mat
- 13.: Compost bed
- 14.: Top disc of partition plate
- 15.: Bottom disc of partition plate
- 16.: Partition
- 17.: Liquid-carrying duct (outward)
- 17'.: Liquid-carrying duct (return)
- 18.: Manifold
- 19.: Manifold
- 20.: Liquid supply
- 21.: Liquid discharge
- 22.: Diversion
- 23.: Manifold
- 24.: Manifold
- 25.: Air pipe
- 26.: Weighing device

## Claims

1. Rack for a compost bed (13), comprising a rack bottom (1), a carrier (11) which is supported with respect to the rack bottom for the compost bed, and a liquid device (10) provided with a liquid supply (20) and a liquid discharge (21) via which a liquid can be passed in order to heat and/or cool the compost bed on the carrier, **characterized in that** the liquid device (10) comprises at least one flat plate (14), one side of which faces the carrier (11) and the other side of which is directly connected to a liquid-carrying duct and/or which other side delimits a liquid-carrying duct (17), which liquid-carrying duct is connected to the liquid supply (20) and the liquid discharge (21).

2. Rack according to Claim 1, wherein the plate (10) is of double-walled design and at least one internal liquid-carrying duct (17) is delimited between the double walls (14, 15).

3. Rack according to Claim 2, wherein the plate (10) comprises several internal liquid-carrying ducts (17, 17'), the liquid supply (20) is connected to a set of ducts (17) at one end of the plate, the liquid discharge (21) is connected to the other set of ducts (17') at the same end of the plate and the ducts of both sets of ducts are connected to one another (22) at the opposite end of the plate in order to provide U-shaped flow paths.

4. Rack according to Claim 2 or 3, wherein several mutually parallel double-walled plates (10) are provided, each of which is connected to the liquid supply (20) and the liquid discharge (21).

5. Rack according to one of the preceding claims, wherein the carrier (11) is directly supported on the at least one plate (10, 14).

6. Rack according to one of the preceding claims, wherein an aeration means (7) is provided which is situated under the carrier (11) for aerating the compost bed (13).

7. Rack according to Claim 5 and 6, wherein the aeration means comprises at least one aeration pipe (7) provided with aeration openings (9) and extends between two adjacent liquid devices (10).

8. Rack according to Claim 7, wherein the aeration pipe (7) preferably has a square or rectangular cross section.

9. Rack according to one of Claims 6-8, wherein an air supply (23, 24) is provided at both ends of the aeration means (7).

10. Rack according to one of Claims 6-9, wherein a filling (8), e.g. made of heat-insulating material, is provided between in each case two adjacent aeration means (7) and a liquid device (10) is in each case supported thereon.

11. Rack according to one of the preceding claims, wherein the liquid device is supported with respect to the rack bottom by a heat-insulating material (8).

12. Rack according to one of the preceding claims, wherein the carrier (11) is grate-shaped.

13. Rack according to one of the preceding claims, wherein the plate (10) is a canal plate or partition plate.

14. Rack according to one of the preceding claims, wherein the combined surface of the sides (14) of the plates (10) facing the carrier (11) covers at least 50% of the surface of the rack bottom (1).

15. Rack according to one of the preceding claims, provided with legs (5) and with a weighing device (26) for weighing the compost bed (13).
